# EUROPÄISCHE PATENTSCHRIFT

(11) **EP 0 818 643 B1**
(45) Veröffentlichungstag und Bekanntmachung des Hinweises auf die Patenterteilung: **09.10.2002**
(21) Anmeldenummer: 97110718.0
(22) Anmeldetag: 01.07.1997
(51) Int. Cl.: F16H 47/04

(54) **Hydrostatisch-mechanisch leistungsverzweigtes Lastschaltgetriebe**
Split-torque hydromechanical transmission
Transmission hydromécanique à division de puissance

(30) Priorität: 13.07.1996 DE 19628330
(43) Veröffentlichungstag der Anmeldung: 14.01.1998
(73) Patentinhaber: CLAAS KGaA, 33428 Harsewinkel (DE)
(72) Erfinder: Brockschmidt, Detlev, 33428 Harsewinkel (DE)

(56) Entgegenhaltungen:
- EP-A- 0 528 319
- EP-A- 0 577 282
- EP-A- 0 716 248
- DE-C- 4 323 358

## Beschreibung

Die Erfindung betrifft ein stufenloses hydrostatisch-mechanisch leistungsverzweigtes Lastschaltgetriebe gemäß den Merkmalen des oberbegriffs von Anspruch 1, wie es aus der EP-A-528 319 bekannt. Ein solches Getriebe findet in Arbeitsmaschinen und Fahrzeugen Verwendung.

Ein weiteres Getriebe ist beispielsweise aus der DE 43 23 358 bekannt. Dort ist ein Getriebe in Form eines 5-welligen Umlaufgetriebes mit drei Planetensätzen gezeigt, in dem der Anfahrgang hydrostatisch-mechanisch leistungsverzweigt ist. Beim Reversieren, also Umschalten vom Vorwärts- in den Rückwärtsgang oder andersherum, muß die Verstelleinheit im Stillstand in die entgegengesetzte Extremlage verstellt werden, wodurch eine deutlich wahrnehmbare Verzögerung des Reversiervorgangs eintritt. In der EP 0 716 248 ist eine Lösung gezeigt, wie die Schaltzeit beim Reversieren beschleunigt werden könnte. Bei der dort gezeigten Lösung schleift beim Anfahren oder Fahren mit niedrigen Geschwindigkeiten die Anfahrlamellenkupplung, was bei Arbeitsmaschinen, die häufiger Anfahren müssen und sich auch häufig mit nur geringer Geschwindigkeit bewegen, zu einem schnellen Verschleiß der Lammellenkupplung führen kann. Außerdem verursacht eine Lamellenkupplung vergleichsweise hohe Leerlaufverluste. Dieses Problem stellt sich in gleicher Weise bei anderen Ausführungsformen.

Es ist die Aufgabe der vorliegenden Erfindung, die Schaltzeit eines gattungsgemäßen Getriebes beim Reversieren zu verkürzen, wobei nach Möglichkeit auch eine volle Reversierbarkeit, das heißt, in beiden Fahrtrichtungen gleich große Geschwindigkeiten bei gleichen Wirkungsgraden und gleich großen Blind- und additiven Leistungseinflüssen zu schaffen, gegeben sein soll.

Die erfindungsgemäße Aufgabe wird durch die Merkmale des Anspruchs 1 gelöst.

Mit der vorgeschlagenen Anordnung ist es möglich, sehr schnell in Bruchteilen von Sekunden zwischen Vorwärts- und Rückwärtsantrieb hin- und herzuschalten, ohne daß dabei noch eine für den Bediener des Fahrzeugs, in dem das Getriebe eingebaut ist, noch wahrnehmbare Zeitverzögerung ergäbe. Das ist insbesondere deshalb möglich, weil für das Anfahren - egal, in welche Richtung - nur eine Extremlage des Hydrostaten erforderlich ist. Legt man das Planetengetriebe so aus, daß das Anfahren im hydrostatisch-mechanisch leistungsverzweigten Bereich erfolgt, so ist mit dem vorgeschlagenen Getriebe beim Anfahren aus der Fahrgeschwindigkeit "Null" heraus ein hohes Drehmoment verfügbar, was der Zugkraft des Fahrzeugs zugute kommt. Diese Eigenschaft ist beispielsweise bei landwirtschaftlichen Traktoren von besonderer Wichtigkeit.

In weiterer Ausgestaltung der Erfindung kann die verlängerte Eingangswelle beispielsweise in einem landwirtschaftlichen Traktor als Zapfwelle verwendet werden. Über ein gemeinsames getriebeeingangsseitig angeordnetes Zahnrad kann gleichzeitig das hydrostatische Stellgetriebe als auch die mechanische Eingangswelle des Planetengetriebes angetrieben werden. Die Ölversorgung des Hydrostaten und die Schmierung des Getriebes kann einfacherweise mit einer von einer Welle des Getriebes angetriebenen Ölpumpe erfolgen. Die Standübersetzung des Planetensatzes "0" wird vorzugsweise so gewählt, daß bei einer bestimmten Drehzahl von der den mechanischen Leistungsanteil in das Planetengetriebe übertragenden Welle und einer entgegengesetzt gleich großen Drehzahl von der den hydrostatischen Leistungsanteil in das Planetengetriebe übertragenden Welle die Drehzahl der Anfahrwelle zu 0 wird. Auch sollten die Gangstufen so gewählt sein, daß zur Erzielung von Drehzahlgleichheit an den Schaltstellen der Hydrostat nominal etwa 80 % ausgeschwenkt werden muß. Weitere vorteilhafte Ausgestaltungen ergeben sich aus den Merkmalen der Unteransprüche sowie der folgenden gegenständlichen Beschreibung.

Die Erfindung ist im folgenden anhand zweier Ausführungsbeispiele erläutert. Es zeigen:
- Figur 1: ein hydrostatisch-mechanisches Lastschaltgetriebe als Einbaugetriebe mit drei Planetensätzen,
- Figur 2: eine Variante des in Figur 1 gezeigten Getriebes,
- Figur 3: eine Skizze, die die erreichbaren Geschwindigkeiten in einzelnen Fahrbereichen des in Figur 2 gezeigten 6-Gang-Getriebes beispielhaft darstellt,
- Figur 4: ein hydrostatisch-mechanisches Lastschaltgetriebe als Blockbaugetriebe mit drei Planetensätzen.

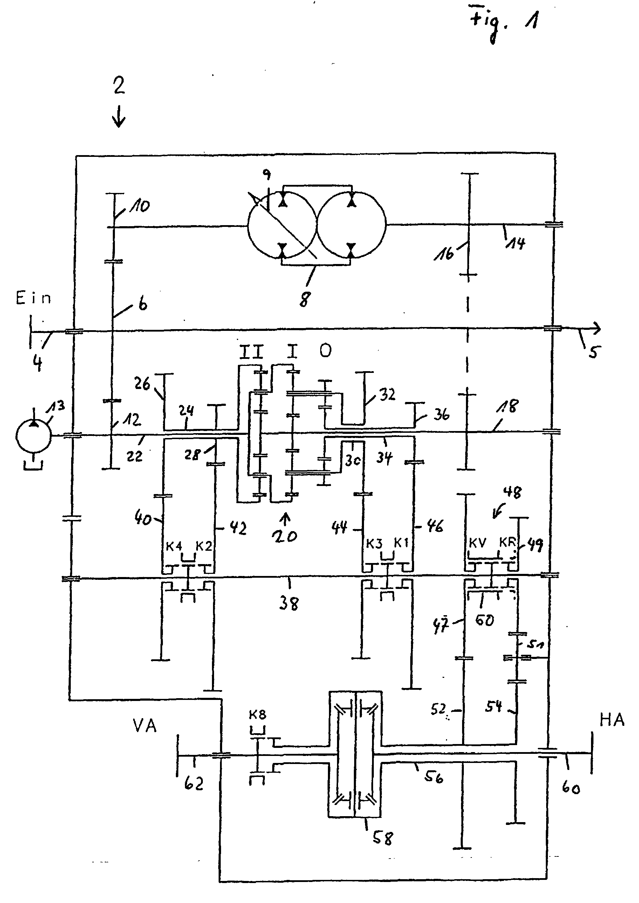

In Figur 1 ist ein Einbaugetriebe 2 zu sehen, das ohne tragende Funktionen in ein Fahrzeug eingebaut werden kann. Die Antriebskraft eines Motors wird von einer Getriebeeingangswelle 4 in das Getriebe 2 übertragen. Die Eingangswelle 4 weist eine Verlängerung 5 auf, die als Zapfwelle für den Antrieb von nachgeordneten Maschinen dienen kann. Im Getriebe verzweigt sich die auf das Zahnrad 6 wirkende Antriebskraft über das mit dem hydrostatischen Stellgetriebe 8 antriebsverbundenen Zahnrad 10 in einen hydrostatischen und über das Zahnrad 12 in einen mechanischen Leistungsanteil. Im hydrostatischen Stellgetriebe 8 symbolisiert der Pfeil 9 eine Verschwenkstellung des Hydrostaten. Über die den hydrostatischen Leistungsanteil übermittelnde Ausgangswelle 14 und dem damit drehfest verbundenen Zahnrad 16 steht das hydrostatische Stellgetriebe 8 in ständiger Wirkverbindung mit der Sonnenradwelle 18 des Planetengetriebes 20, hier bestehend aus den Planetentadsätzen 0, I und II. Der mechanische Leistungsanteil wird über die Stegradwelle II bzw. Hohlradwelle 22 in das Planetengetriebe 20 eingebracht. Beispielhaft ist die Ölpumpe 13 mit der Welle 22 antriebsverbunden. Der Abtrieb vom Planetengetriebe 20 erfolgt über die drehfest mit der Hohlradwelle 24 verbundenen Zahnräder 26 und 28, über das drehfest mit dem Steg I 30 verbundene Zahnrad 32 und über das drehfest mit der Sonnenradwelle 34 verbundene Zahnrad 36. Die Zahnräder 26, 28, 32 und 36 stehen mit drehbar auf einer Kupplungswelle (Eingangswelle des Wendegetrieb 38 gelagerten Zahnrädern 40, 42, 44 und 46 eines 4-gängigen Schaltgetriebes in Wirkverbindung. Die Standübersetzung des Planetentadsatzes "0" ist dabei so gewählt, daß sich bei einer bestimmten Drehzahl der Wellen 22, 18 eine Drehzahl = 0 der Anfahrwelle 34 ergibt. Über die beiden Doppelkupplungen K1/K3 und K2/K4 können die Antriebskräfte auf die Kupplungswelle 38 durchgeschaltet werden. Die Kupplungen des Getriebes 2 können als kraft- oder formschlüssige Schaltkupplungen ausgebildet sein. An einem Ende der Kupplungswelle 38, die aus einem oder mehreren drehfest miteinander verbundenen Stücken bestehen kann, ist dann ein Wendegetriebe 48 angeordnet, bei dem durch Betätigen der Kupplung 50 zwischen Vorwärtsund Rückwärtsgang hin- und hergeschaltet werden kann. Um eine möglichst hohe volle Reversibilität zu erhalten, sollten die Stufen 47/52 und 49/54 mit Zwischenrad 51 eine gleiche oder ähnliche Übersetzung haben. Ist eine volle Reversibilität nicht gewünscht, können natürlich auch erheblich voneinander differierende Übersetzungen gewählt werden. Je nach Schaltung des Wendegetriebes wird die Antriebskraft auf die Zahnräder 52 oder 54 gelenkt, die drehfest auf der Hohlwelle 56 befestigt sind und die Antriebsenergie über das Längsdifferentialgetriebe 58 auf die Hinterachswelle 60 zur Hinterachse HA und die Vorderachswelle 62 zur Vorderachse VA eines Fahrzeugs überträgt. Das Längsdifferential kann im gezeigten Beispiel noch durch eine Kupplung K8 wahlweise gesperrt werden. Statt des Längsdifferentials kann eine glatte Welle, die Vorder- und Hinterachse drehfest miteinander verbindet, verwendet werden. Zum Reversieren des Getriebes muß im Ausführungsbeispiel das hydrostatische Verstellgetriebe 8 nicht mehr in eine andere Extremstellung verschwenkt werden, es genügt, im geregelten Stillstand der Kupplungswelle 38 die Kupplungsmuffe der Kupplung 50 aus einer Position KV oder KR in die jeweils andere Position KV oder KR zu verschieben, was in Bruchteilen von Sekunden möglich ist. Eine Umschaltung kann so schnell erfolgen, daß sie für den Bediener des Fahrzeugs, in dem sich das Getriebe 2 befindet, nicht mehr als Zeitverzögerung wahrgenommen werden kann.

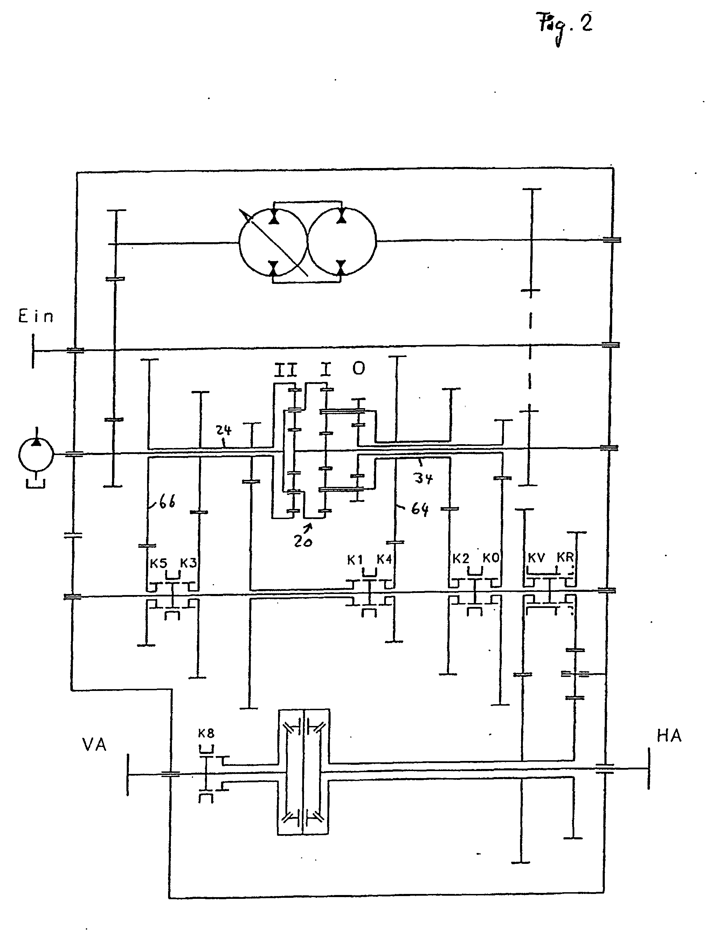

Figur 2 zeigt eine Abwandlung des vorgeschlagenen Getriebes. In der Funktion und dem Aufbau ist das in Figur 2 gezeigte Getriebe mit demjenigen aus Figur 1 vergleichbar; der wesentliche Unterschied besteht darin, daß auf der Welle 24 und auf der Welle 34 je ein zusätzliches Zahnrad 64, 66 angebracht und eine zusätzliche Doppelkupplung vorgesehen ist, wodurch sich anstelle des in Figur 1 gezeigten 4-Gang-Schaltgetriebes ein 6-Gang-Schaltgetriebe ergibt.

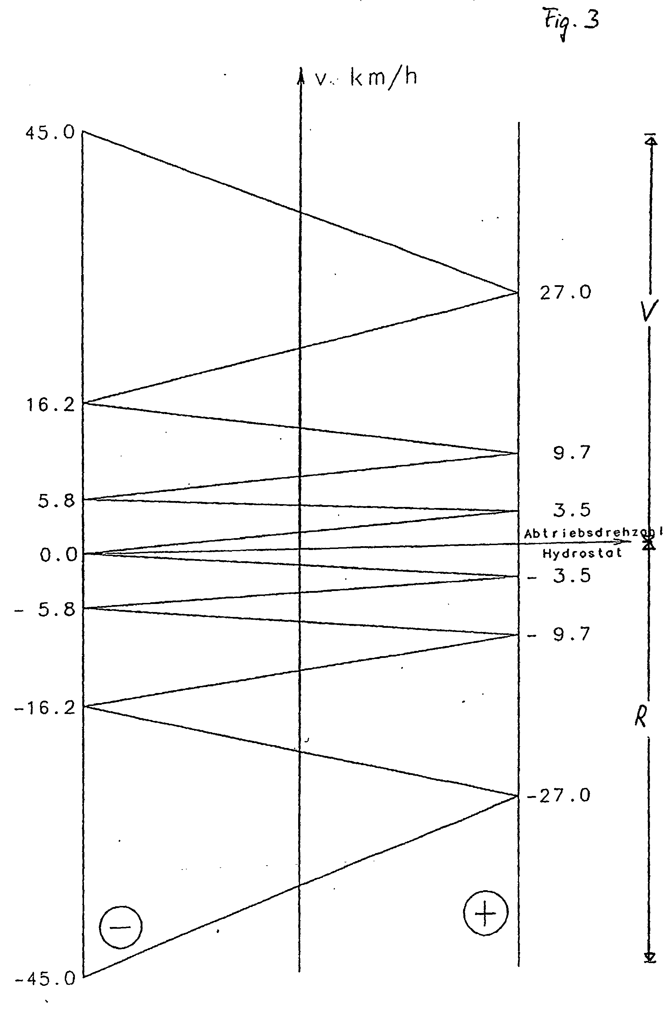

Im in Figur 3 gezeigten Koordinatensystem ist auf der Abszisse die Abtriebsdrehzahl der Sonnenradwelle 18 und auf der Ordinate die erreichbare Geschwindigkeit in km/h dargestellt. Ausgehend vom Punkt 0.0 muß zunächst entschieden werden, ob sich das Fahrzeug vorwärts (V) oder rückwärts (R) bewegen soll. Der Vorgabe entsprechend wird die Antriebskraft von der Kupplung 50 auf die Vorwärts- oder Rückwärts-Zahnradgruppe gekuppelt. Entsprechend der vorgewählten Fahrtrichtung nimmt das mit dem erfindungsgemäßen Getriebe ausgestattete Fahrzeug dann durch Verschwenken des hydrostratischen Stellgetriebes 8 in Richtung + im ersten Fahrbereich, der bis zu einer Geschwindigkeit von 3,5 km/h reicht, Fahrt auf. Erreicht das hydrostatische Stellgetriebe 8 seinen maximalen +-Wert, wird von der Doppelkupplung K0/K2 der erste Gang aus- und von der Doppelkupplung K1/K4 der zweite Gang eingelegt. Aufgrund der Summierung des mechanischen mit dem hydrostatischen Leistungsanteils im Planetengetriebe 20 drehen sich die entsprechenden Zahnräder der beiden Gänge mit gleicher Drehzahl, wodurch ein Gangwechsel mit kostengünstigen Formschluß-Kupplungen möglich ist. Ein solcher Effekt ist erreichbar, wenn die Standübersetzungen beispielsweise von i_{I} = -4, von i_{II} = -3 und von i₀ = +2,67 (Anfahrwelle) beträgt. Ist der neue Gang eingelegt, schwenkt die Verstelleinheit des hydrostatischen Stellgetriebes 8 zurück in Richtung -, wobei das Fahrzeug weiter beschleunigt. Erreicht das Fahrzeug eine Geschwindigkeit von 5,8 km/h, so ist die Verstelleinheit voll zurückgeschwenkt, und der nächsthöhere Gang muß eingelegt werden, wenn die Beschleunigung fortgesetzt werden soll. So kann schließlich die gezeigte Höchstgeschwindigkeit von 45 km/h erreicht werden. Ist eine Verringerung der Geschwindigkeit gewünscht, so wird das Getriebe in entgegengesetzter Richtung entlang der gezeigten Kennlinie geregelt. Andere Geschwindigkeitswerte ergeben sich, wenn ein insgesamt anderes Übersetzungsverhältnis gewählt wird und/oder die einzelnen Sätze des Planetengetriebes 20 einander in unterschiedlicher Weise zugeordnet werden. Ein Fachman ist ohne Schwierigkeiten dazu in der Lage, das vorgeschlagene Konzept den Rahmenbedingungen einer bestimmten Verwendung entsprechend anzupassen. Die Verstelleinheit des hydrostatische Stellgetriebes 8 kann beispielsweise ein Volumen von 75 cm³ und die Konstanteinheit ein Volumen von 55 cm³ mit einem maximal zulässigen Höchstdruck von p = 480 bar aufweisen, auch können je nach Anwendungsfall davon abweichende Werte gewählt werden. Die in Figur 3 gezeigte Kennlinie für ein 6-Gang-Getriebe kann natürlich Variiert werden und für andere Gangzahlen den Anforderungen entsprechend ausgelegt werden.

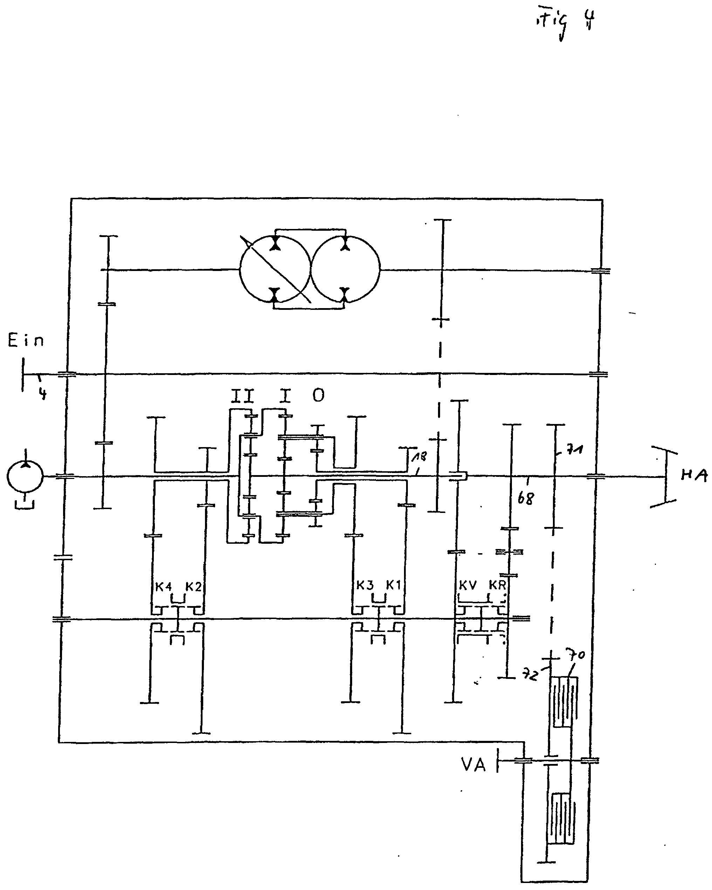

In Figur 4 ist ein erfindungsgemäßes Getriebe als sogenanntes Blockbaugetriebe gezeigt. Als Blockbaugetriebe kann das Getriebe zwischen Motor und Achse angeordnet tragende Eigenschaften übernehmen. Auch dieses Getriebe ist in seinem Aufbau und seiner Funktion noch mit dem in Figur 1 gezeigten Getriebe vergleichbar. Unterschiede ergeben sich hier, indem die Abtriebswelle 68 zur Hinterachse auf die Sonnenradwelle 18 aufgesteckt ist, sie damit über dasselbe Drehzentrum verfügen und so eine flachere Bauweise des Getriebes ermöglicht. Insbesondere sind durch die gewählte Anordnung übliche Achsabstände zwischen Eingangswelle 4 und Ausgangswelle 68 problemlos möglich, wie sie von verschiedenen Traktorherstellern vorgegeben werden. Der Antrieb zur Vorderachse wird über eine beliebige Zahnradstufe von der Abtriebswelle 68 abgeleitet und ist über eine Lamellenkupplung 70 zu- oder abschaltbar. Die Vorderachsendrehzahlen VA können über die Stufe 71/72 angepaßt werden.

## Patentansprüche

1. Stufenloses hydrostatisch-mechanisch leistungsverzweigtes Lastschaltgetriebe (2),
- bestehend aus einem Wendegetriebe (48) mit zugehöriger Eingangswelle (38) und Ausgangswelle, einem hydrostatischen Stellgetriebe (8), zumindest einem Planetengetriebe (20) und nachgeschalteten wahlweise schaltbaren Gangstufen,
- wobei eine Getriebeeingangswelle (4), die den mechanischen Leistungsanteil überträgt, und eine Abtriebswelle (14) des hydrostatischen Stellgetriebes in ständiger Wirkverbindung mit dem Planetengetriebe stehen,
- wobei der vom hydrostatischen Stellgetriebe übertragene Leistungsanteil und die Drehzahl variabel ist,
- und wobei das Wendegetriebe dem Planetengetriebe nachgeordnet ist, welches den mechanischen und hydrostatischen Leistungsanteil summiert,
**dadurch gekennzeichnet, daß**
- auf der Eingangswelle (38) des Wendegetriebes, welches eine erste Zahnradstufe und eine zweite Zahnradstufe mit einem Zwischenrad zur Drehrichtungsumkehr aufnimmt, jeweils ein Zahnrad der schaltbaren Gangstufen sitzt,
- die treibenden Zahnräder der Zahnradstufen auf der Eingangswelle des Wendegetriebes angeordnet und die abtreibenden Zahnräder der Zahnradstufen mit der Ausgangswelle des Wendegetriebes fest verbunden sind,
- wobei die treibenden Zahnräder über eine Schaltkupplung (50) wahlweise mit der Eingangswelle des Wendegetriebes verbindbar sind.

2. Lastschaltgetriebe nach Anspruch 1, **dadurch gekennzeichnet, daß** der Anfahrgang hydrostatisch-mechanisch leistungsverzweigt ist.

3. Lastschaltgetriebe nach einem oder mehreren der Ansprüche 1 bis 2, **dadurch gekennzeichnet, daß** das hydrostatische Stellgetriebe (8) für das Anfahren nach Vorwärts oder Rückwärts in derselben Extremstellung steht.

4. Lastschaltgetriebe nach einem oder mehreren der Ansprüche 1 bis 3, **dadurch gekennzeichnet, daß** die Getriebeeingangswelle (4) verlängert ist und als Zapfwelle verwendet werden kann.

5. Lastschaltgetriebe nach einem oder mehreren der Ansprüche 1 bis 4 **dadurch gekennzeichnet, daß** über ein auf der Getriebeeingangswelle (4) sitzendes Zahnrad (6) sowohl das hydrostatische Stellgetriebe (8) als auch eine Welle (22) des Planetengetriebes (20) gleichzeitig angetrieben werden.

6. Lastschaltgetriebe nach einem oder mehreren der Ansprüche 1 bis 5, **dadurch gekennzeichnet, daß** die Ölversorgung des hydrostatischen Stellgetriebes (8) und die Schmierung des Getriebes mit einer von einer Welle des Getriebes angetriebenen Ölpumpe erfolgt.

7. Lastschaltgetriebe nach einem oder mehreren der Ansprüche 1 bis 6, **dadurch gekennzeichnet, daß** die Standübersetzung eines Planetenradsatzes (0) des Planetengetriebes (20) so gewählt wird, daß bei einer bestimmten Drehzahl von der den mechanischen Leistungsanteil übertragenden Welle (22) und einer entgegengesetzt gleich großen Drehzahl von einer den hydrostatischen Leistungsanteil übertragenden Welle (18) die Drehzahl einer Anfahrwelle (34) zu 0 wird.

8. Lastschaltgetriebe nach einem oder mehreren der Ansprüche 1 bis 7, **dadurch gekennzeichnet, daß** die Gangstufen so gewählt sind, daß zur Erzielung von Drehzahlgleichheit an den Schaltstellen das hydrostatische Stellgetriebe nominal etwa 80 % ausgeschwenkt sein muß.

9. Lastschaltgetriebe nach einem oder mehreren der Ansprüche 1 bis 8, **dadurch gekennzeichnet, daß** zwei Gangstufen (36,46 und 28,42) einerseits sowie zwei Gangstufen (32,44 und 26,40) andererseits jeweils dieselbe Übersetzung aufweisen.

10. Lastschaltgetriebe nach einem oder mehreren der Ansprüche 1 bis 9, **dadurch gekennzeichnet, daß** die Schaltkupplungen (50, K1-K4) kraft- oder formschlüssige Schaltkupplungen sind.

11. Lastschaltgetriebe nach einem oder mehreren der Ansprüche 1 bis 10, **dadurch gekennzeichnet, daß** die Eingangswelle (38) des Wendegetriebes aus einem Stück oder aus mehreren drehfest miteinander verbundenen Teilstücken besteht.

12. Lastschaltgetriebe nach einem oder mehreren der Ansprüche 1 bis 11, **dadurch gekennzeichnet, daß** die Zahnräder der Zahnradstufen des Wendegetriebes gleiche oder ähnliche Übersetzungen haben.

13. Lastschaltgetriebe nach einem oder mehreren der Ansprüche 1 bis 12, **dadurch gekennzeichnet, daß** eine Vorderachse und Hinterachse eines Fahrzeuges miteinander über ein sperrbares Längsdifferential (58) koppelbar sind.

14. Lastschaltgetriebe nach einem oder mehreren der Ansprüche 7 bis 13, **dadurch gekennzeichnet, daß** die Ausgangswelle (68) des Wendegetriebes zur Hinterachse dasselbe Drehzentrum aufweist wie die Welle (18).

15. Lastschaltgetriebe nach einem oder mehreren der Ansprüche 1 bis 14, **dadurch gekennzeichnet, daß** bei Ausführung als Blockbaugetriebe die Vorderachsdrehzahl über eine Getriebestufe (71/72) anpaßbar ist.

16. Lastschaltgetriebe nach einem oder mehreren der Ansprüche 1 bis 15, **dadurch gekennzeichnet, daß** die Vorderachse über eine Lamellenkupplung zuschaltbar ist.

17. Lastschaltgetriebe nach einem oder mehreren der Ansprüche 1 bis 16, **dadurch gekennzeichnet, daß** dem Planetenradsatz (I) des Planetengetriebes (20) eine, dem Planetenradsatz (0) des Planetengetriebes (20) eine und dem Planetenradsatz (II) des Planetengetriebes zwei Gangstufen nachgeordnet sind.

18. Lastschaltgetriebe nach einem oder mehreren der Ansprüche 1 bis 16, **dadurch gekennzeichnet, daß** dem Planetenradsatz (I) zwei, dem Planetenradsatz (0) eine und dem Planetenradsatz (II) zwei Gangstufen nachgeordnet sind.

19. Lastschaltgetriebe nach einem oder mehreren der Ansprüche 1 bis 16, **dadurch gekennzeichnet, daß** dem Planetenradsatz (I) zwei, dem Planetenradsatz (0) eine und dem Planetenradsatz (II) drei Gangstufen nachgeordnet sind.

## Claims

1. A stepless hydrostatically-mechanically power-branched load shift transmission (2)
- comprising a reversing gear (48) with associated input shaft (38) and output shaft, a hydrostatic regulating gear (8), at least one planetary gear (20) and downstream-disposed selectively shiftable gear stages,
- wherein a transmission input shaft (4) which transmits the mechanical power component and a drive output shaft (14) of the hydrostatic regulating gear are constantly operatively connected to the planetary gear,
- wherein the power component transmitted by the hydrostatic regulating gear and the rotary speed is variable,
- and wherein the reversing gear is arranged downstream of the planetary gear which sums the mechanical and hydrostatic load components,
**characterised in that**
- a respective gear of the shiftable gear stages is carried on the input shaft (38) of the reversing gear which accommodates a first gear stage and a second gear stage with an intermediate gear for rotary direction reversal,
- the driving gears of the gear stages are arranged on the input shaft of the reversing gear and the drive output gears of the gear stages are fixedly connected to the output shaft of the reversing gear,
- wherein the driving gears are connectable by way of a shift clutch (50) selectively to the input shaft of the reversing gear.

2. A load shift transmission according to claim 1 **characterised in that** the starting gear is hydrostatically-mechanically power-branched.

3. A load shift transmission according to one or more of claims 1 and 2 **characterised in that** the hydrostatic regulating gear (8) is in the same extreme position for starting forwardly or rearwardly.

4. A load shift transmission according to one or more of claims 1 to 3 **characterised in that** the transmission input shaft (4) is extended and can be used as a power take-off shaft.

5. A load shift transmission according to one or more of claims 1 to 4 **characterised in that** both the hydrostatic regulating gear (8) and also a shaft (22) of the planetary gear (20) are driven at the same time by way of a gear (6) carried on the transmission input shaft (4).

6. A load shift transmission according to one or more of claims 1 to 5 **characterised in that** the oil supply of the hydrostatic regulating gear (8) and lubrication for the transmission is effected by an oil pump driven by a shaft of the transmission.

7. A load shift transmission according to one or more of claims 1 to 6 **characterised in that** the status transmission ratio of a planet gear set (0) of the planetary gear (20) is so selected that at a given rotary speed of the shaft (22) transmitting the mechanical power component and an oppositely equal rotary speed of a shaft (18) transmitting the hydrostatic power component the rotary speed of a starting shaft (34) becomes 0.

8. A load shift transmission according to one or more of claims 1 to 7 **characterised in that** the gear stages are so selected that to achieve rotary speed equality at the shift points the hydrostatic regulating gear must be nominally taken out about 80%.

9. A load shift transmission according to one or more of claims 1 to 8 **characterised in that** two gear stages (36, 46 and 28, 42) on the one hand and two gear stages (32, 44 and 26, 40) on the other hand each have the same transmission ratio.

10. A load shift transmission according to one or more of claims 1 to 9 **characterised in that** the shift clutches (50, K1-K4) are force-locking or positively locking shift clutches.

11. A load shift transmission according to one or more of claims 1 to 10 **characterised in that** the input shaft (38) of the reversing gear comprises one piece or a plurality of portions which are non-rotatably connected together.

12. A load shift transmission according to one or more of claims 1 to 11 **characterised in that** the gears of the gear stages of the reversing gear have identical or similar transmission ratios.

13. A load shift transmission according to one or more of claims 1 to 12 **characterised in that** a front axle and a rear axle of a vehicle can be coupled together by way of a lockable longitudinal differential (58).

14. A load shift transmission according to one or more of claims 7 to 13 **characterised in that** the output shaft (68) of the reversing gear to the rear axle has the same centre of rotation as the shaft (18).

15. A load shift transmission according to one or more of claims 1 to 14 **characterised in that** when designed as a modular transmission the front axle rotary speed is adaptable by way of a transmission stage (71/72).

16. A load shift transmission according to one or more of claims 1 to 15 **characterised in that** the front axle can be cut in by way of a plate clutch.

17. A load shift transmission according to one or more of claims 1 to 16 **characterised in that** arranged downstream of the planet gear set (I) of the planetary gear (20) is one gear stage, arranged downstream of the planet gear set (0) of the planetary gear (20) is one gear stage and arranged downstream of the planet gear set (II) of the planetary gear are two gear stages.

18. A load shift transmission according to one or more of claims 1 to 16 **characterised in that** arranged downstream of the planet gear set (I) are two gear stages, arranged downstream of the planet gear set (0) is one gear stage and arranged downstream of the planet gear set (II) are two gear stages.

19. A load shift transmission according to one or more of claims 1 to 16 **characterised in that** arranged downstream of the planet gear set (I) are two gear stages, arranged downstream of the planet gear set (0) is one gear stage and arranged downstream of the planet gear set (II) are three gear stages.

## Revendications

1. Transmission hydromécanique (2) à variation continue à division de puissance,
- comprenant une transmission réversible (48) avec un arbre d'entrée (38) et un arbre de sortie associés, un variateur de couple (8) hydrostatique, au moins un engrenage planétaire (20) et des rapports de vitesses sélectionnables, placés derrière,
- dans laquelle un arbre d'entrée (4) qui transmet la part de puissance mécanique et un arbre de sortie (14) du variateur de couple hydrostatique est en prise permanente avec l'engrenage planétaire,
- dans laquelle la part de puissance transmise par le variateur de couple hydrostatique et la vitesse de rotation sont variables
- dans laquelle la transmission réversible est placée derrière l'engrenage planétaire, qui additionne les parts de puissance mécanique et hydrostatique,
**caractérisée en ce que**
- sur l'arbre d'entrée (38) de la transmission réversible, qui reçoit un premier étage de roues dentées et un deuxième étage de roues dentées avec un pignon intermédiaire pour l'inversion du sens de rotation, est monté un pignon des rapports de vitesses sélectionnables,
- les pignons menants des étages de pignons sont disposés sur l'arbre d'entrée de la transmission réversible et les pignons menés des étages de pignons sont solidaires de l'arbre de sortie de la transmission réversible,
- les pignons menants pouvant être couplés de manière sélective à l'arbre d'entrée de la transmission réversible par l'intermédiaire d'un embrayage (50).

2. Transmission selon la revendication 1, **caractérisée en ce que** le rapport de démarrage est à division de puissance hydrostatique-mécanique.

3. Transmission selon une ou plusieurs des revendications 1 à 2, **caractérisée en ce que** le variateur de couple (8) hydrostatique pour le démarrage vers l'avant ou vers l'arrière est dans la même position extrême.

4. Transmission selon une ou plusieurs des revendications 1 à 3, **caractérisée en ce que** l'arbre d'entrée (4) est prolongé et peut être utilisé comme arbre de prise de puissance

5. Transmission selon une ou plusieurs des revendications 1 à 4, **caractérisée en ce que** grâce à un pignon (6) monté sur l'arbre d'entrée (4), le variateur de couple (8) hydrostatique ainsi qu'un arbre (22) de l'engrenage planétaire (20) sont entraînés simultanément.

6. Transmission selon une ou plusieurs des revendications 1 à 5, **caractérisée en ce que** l'alimentation en huile du variateur de couple (8) hydrostatique et la lubrification de la transmission sont assurées par une pompe à huile entraînée par un arbre de la transmission.

7. Transmission selon une ou plusieurs des revendications 1 à 6, **caractérisée en ce que** le rapport de transmission de base d'un jeu de roues planétaires (0) de l'engrenage planétaire (20) est choisi tel que, pour une vitesse de rotation donnée de l'arbre (22) assurant la transmission de la part de puissance mécanique, et une vitesse de rotation de même valeur mais opposée d'un arbre (18) assurant la transmission de la part de puissance hydrostatique, la vitesse d'un arbre de démarrage (34) est égale à zéro.

8. Transmission selon une ou plusieurs des revendications 1 à 7, **caractérisée en ce que** les rapports de vitesses sont choisis tels, que pour obtenir une égalité de vitesse de rotation aux points de changement de vitesse, le variateur de couple hydrostatique doit être rempli à environ 80%.

9. Transmission selon une ou plusieurs des revendications 1 à 8, **caractérisée en ce que** deux rapports de vitesses (36, 46 et 28, 42) d'une part et deux rapports de vitesses (32, 44 et 26, 40) d'autre part présentent le même rapport de démultiplication.

10. Transmission selon une ou plusieurs des revendications 1 à 9, **caractérisée en ce que** les embrayages (50, K1-K4) sont des embrayages à friction ou des embrayages positifs.

11. Transmission selon une ou plusieurs des revendications 1 à 10, **caractérisée en ce que** l'arbre d'entrée (38) de la transmission réversible est réalisé d'une pièce ou est formé de plusieurs tronçons solidaires les uns des autres en rotation.

12. Transmission selon une ou plusieurs des revendications 1 à 11, **caractérisée en ce que** les roues dentées des étages de transmission de la transmission réversible ont des rapports de transmission identiques ou similaires.

13. Transmission selon une ou plusieurs des revendications 1 à 12, **caractérisée en ce qu'**un essieu avant et un essieu arrière d'un véhicule peuvent être couplés l'un à l'autre par l'intermédiaire d'un différentiel longitudinal verrouillable.

14. Transmission selon une ou plusieurs des revendications 7 à 13, **caractérisée en ce que** l'arbre de sortie (68) de la transmission réversible menant à l'essieu arrière a le même centre de rotation que l'arbre (18).

15. Transmission selon une ou plusieurs des revendications 1 à 14, **caractérisée en ce que** dans le cas d'une transmission de type compacte la vitesse de rotation de l'essieu avant peut être adapté au moyen d'un étage de transmission (71/72).

16. Transmission selon une ou plusieurs des revendications 1 à 15, **caractérisée en ce que** l'essieu avant peut être connecté par l'intermédiaire d'un embrayage à disques.

17. Transmission selon une ou plusieurs des revendications 1 à 16, **caractérisée en ce qu'**il est prévu derrière le train d'engrenages planétaires (1) de la transmission planétaire (20), un étage de transmission, derrière le train d'engrenages planétaires (0) de la transmission planétaire (20), un étage de transmission, et derrière le train d'engrenages planétaires (II) de la transmission planétaire (20), deux étages de transmission.

18. Transmission selon une ou plusieurs des revendications 1 à 16, **caractérisée en ce qu'**il est prévu derrière le train d'engrenages planétaires (1), deux étages de transmission, derrière le train d'engrenages planétaires (0), un étage de transmission, et derrière le train d'engrenages planétaires (II) deux étages de transmission.

19. Transmission selon une ou plusieurs des revendications 1 à 16, **caractérisée en ce qu'**il est prévu derrière le train d'engrenages planétaires (1), deux étages de transmission, derrière le train d'engrenages planétaires (0), un étage de transmission, et derrière le train d'engrenages planétaires (II) trois étages de transmission
